# EUROPÄISCHE PATENTSCHRIFT

(11) **EP 3 501 260 B1**
(45) Veröffentlichungstag und Bekanntmachung des Hinweises auf die Patenterteilung: **30.09.2020**
(21) Anmeldenummer: 18212991.6
(22) Anmeldetag: 17.12.2018
(51) Int. Cl.: A01F 12/56, A01D 34/82, A01D 69/06, F16H 35/10

(54) **LANDWIRTSCHAFTLICHE MASCHINE**
AGRICULTURAL MACHINE
ENGIN AGRICOLE

(30) Priorität: 20.12.2017 DE 102017223375
(43) Veröffentlichungstag der Anmeldung: 26.06.2019
(73) Patentinhaber: Deere & Company, Moline, IL 61265 (US)
(72) Erfinder: Vergara, Daniel, 68163 Mannheim (DE)
(74) Vertreter: Reichert, Christian

(56) Entgegenhaltungen:
- EP-A2- 0 826 902
- EP-A2- 2 280 191
- WO-A1-90/09314
- DE-A1- 10 322 642
- US-A- 4 248 249
- US-A- 4 483 128
- US-A- 4 932 280

## Beschreibung

Die Erfindung betrifft eine landwirtschaftliche Maschine mit wenigstens einer Bearbeitungseinrichtung für Erntegut und einem Antriebsstrang für die wenigstens eine Bearbeitungseinrichtung, wobei der Antriebsstrang eine Ausgangsgetriebestufe mit einer Abtriebswelle für die wenigstens eine Bearbeitungseinrichtung aufweist, wobei die Ausgangsgetriebestufe ein Eingangszahnrad und eine mit dem Eingangszahnrad und der Abtriebswelle drehfest verbundene Nutenwelle umfasst, derart, dass eine Antriebsverbindung zwischen Eingangszahnrad und Abtriebswelle über die Nutenwelle erfolgt.

Im Stand der Technik sind landwirtschaftliche Maschinen, insbesondere Erntemaschinen mit Bearbeitungseinrichtungen für aufgenommenes Erntegut bekannt. Dazu gehören beispielsweise Mähdrescher, Feldhäcksler oder auch Zuckerrohrernter oder auch andere Erntemaschinen, die eine Bearbeitung für aufgenommenes Erntegut in der Maschine vorsehen. So kann im Erntegutfluss beim Ernten des Ernteguts ein Dreschen, Häckseln, Schneiden oder eine andere Art der Bearbeitung vorgesehene sein, wobei für die Bearbeitungseinrichtung eine Antriebseinheit vorgesehen sein kann, die ein Zwischengetriebe umfasst, welcher zur Absicherung gegen eine Überlastung mit einem Überlastschutz versehen ist. Der Überlastschutz kann mit einer Torsionssicherung in Form von Scherbolzen, Rutschkupplung oder einer anderen Art von Überlastschutz ausgestattet ist. Die Einrichtung einer Rutschkupplung ist in der Regel ungünstig hinsichtlich eines komplexen Bauaufwands und Verschleißanfälligkeit. Eine Anordnung von Scherbolzen erfordert ebenfalls aufwändige Instandhaltungsarbeiten. Sollte es wegen einer Überlastung der Antriebseinheit zu einem Abscheren der Scherstifte gekommen sein ist generell eine Instandhaltung sehr aufwendig und erfordert in der Regel den Ausbau der Antriebseinheit und einen Austausch der Scherbolzen. Insbesondere der Ausbau der Antriebseinheit ist kostenintensiv und sehr zeitaufwändig.

Ein derartige Erntemaschine ist beispielsweise in der US 4,248,249 A offenbart. Dort wird ein Axialfluss-Mähdrescher mit einem Schneidvorsatz zum Schneiden und Zuführen von Erntegut beschrieben. Das Erntegut wird in Form von Schnittgut einem Dresch- und Trennsystem zugeführt, wobei das System ein Gehäuse, in dem das Schnittgut aufgenommen wird, und einen Rotor im Gehäuse zum Dreschen und Trennen der Körner vom Schnittgut umfasst. Der Rotor besitzt eine Rotorachse, welche durch ein Getriebe am hinteren Bereich des Rotors angetrieben wird, wobei das Getriebe eine Eingangs- und eine Ausgangswelle umfasst und letztere den Rotor antriebt. Das Getriebe ist ohnehin schwer zugänglich und ein Abscheren eines Scherstiftes als im Getriebe vorgesehene Überlastsicherung würde zur Reparatur und Instandsetzung den gesamten Ausbau des Getriebes erfordern Die EP-A2-2 280 191 offenbart Überlastschutzvorrichtungen für die Antriebseinheit eines Zahnkranzes, wobei in einer Ausführung die Antriebswelle eines Ritzels mit einer eine Sollbruchstelle vorgebenden Ringnut versehen ist.

Die der Erfindung zugrunde liegende Aufgabe wird darin gesehen, eine landwirtschaftliche Maschine der eingangs genannten Art anzugeben, durch welches die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird eine landwirtschaftliche Maschine der eingangs genannten Art derart ausgebildet, dass die Nutenwelle mit einer eine Sollbruchstelle vorgebenden Ringnut versehen ist, wobei die Ringnut in Antriebsflussrichtung zwischen dem Eingangszahnrad und der Abtriebswelle ausgebildet ist, und die Nutenwelle eingangszahnradseitig durch eine Montageöffnung zugänglich ist, die an einer den Antriebsstrang umgebenden Gehäusewand, axial zur Nutenwelle fluchtend, ausgebildet ist. Die Montageöffnung ermöglicht einen Austausch der Nutenwelle bei Abscherung durch Überlastung. Über die Montageöffnung ist der Zugang und ein notwendiger Montagespielraum gewährleistet, so dass eine schnelle und aufwandsarme Reparatur bzw. ein schneller und aufwandsarmer Austausch der Nutenwelle erfolgen kann. Insbesondere wird ermöglicht, die Reparatur bzw. den Austausch der Nutenwelle ohne Ausbau oder Freisetzung des übrigen Antriebsstrangs oder wesentlichen Teilen davon vorzunehmen.

Am Eingangszahnrad und an der Abtriebswelle sind Innenverzahnungen vorgesehen, wobei die am Eingangszahnrad ausgebildete Innenverzahnung als Durchgangsinnenverzahnung ausgebildet ist und beide Innenverzahnungen axial zueinander fluchten und wobei die Nutenwelle beide Innenverzahnungen antriebsflussmäßig miteinander verbindet. Die im Eingangszahnrad vorgesehene Innenverzahnung stellt demnach auch eine der Montageöffnung zugewandte Öffnung bereit und vereinfacht zudem den Austausch der Nutenwelle bzw. erleichtert den Zugang zur Nutenwelle bei Einsatz und/oder Austausch derselben.

Die an der Nutenwelle ausgebildete Ringnut oder auch ringförmige Aussparung oder Einkerbung ist zwischen den Innenverzahnungen ausgebildet, so dass eine Abscherung oder ein Bruch an dieser Stelle zur Antriebsunterbrechung zwischen dem Eingangszahnrad und der Abtriebswelle führt.

In der Nutenwelle kann eine sich in Längsrichtung der Nutenwelle erstreckende Gewindebohrung ausgebildet sein, die zu Montagezwecken bzw. Reparaturzwecken genutzt werden kann, um beispielsweise den bei einem Abscheren oder Bruch in den Innenbohrungen verbleibenden Teile bzw. Hälften der Nutenwelle greifen und herausziehen zu können.

Ein sich antriebsflussmäßig hinter der Ringnut erstreckender Teil der Gewindebohrung kann mit einem geringeren Durchmesser als ein antriebsflussmäßig vor der Ringnut erstreckender Teil der Gewindebohrung aufweisen. Dadurch wird beispielsweise begünstigt, dass bei einem Abschervorgang die Gewindebohrung mit geringerem Durchmesser nicht deformiert bzw. beschädigt wird, so dass der Zugang und zweckmäßige Gebrauch der Gewindebohrung im Bereich beider Durchmesser sichergestellt wird. Die Gewindebohrungen sollen dabei für Montagezwecke bzw. bei Ersatz einer abgescherten bzw. gebrochenen Nutenwelle, das Eindrehen eines Gewindebolzenz zum Herausziehen der in den Innenbohrungen verbleibenden Teile der Nutenwelle ermöglichen.

Eine Bearbeitungseinrichtung der oben beschriebenen Art kann beispielsweise in Erntemaschinen, insbesondere in Mähdreschern, Maispflückern, Zuckerrohrerntern, Mähmaschinen oder Feldhäckslern vorgesehen sein, wobei die Bearbeitungseinrichtung als Häckseleinrichtung, Schneideinrichtung oder Drescheinrichtung ausgebildet sein kann. Denkbar ist es auch, dass mehrere Bearbeitungseinrichtungen parallel betrieben werden, beispielsweise zwei nebeneinander angeordnete Dreschtrommeln oder Dreschrotoren. Es bietet sich dann an, für jede dieser Bearbeitungseinrichtungen eine separate Ausgangsgetriebestufe vorzusehen, wobei den Ausgangsgetriebestufen im Antriebsstrang beispielsweise ein Verzweigungsgetriebe vorgeschaltet ist.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine schematische Querschnitts-Seitenansicht einer Erntemaschine in Form eines Mähdreschers mit einer Bearbeitungseinrichtung und einem dafür ausgebildeten Antriebsstrang,
- Fig. 2: eine schematische Querschnitts-Draufsicht der Erntemaschine aus Figur 1
- Fig. 3: eine vergrößerte Querschnitts-Ansicht eines Teils des Antriebsstrangs mit Ausgangsgetriebestufe aus Figur 2
- Fig. 4a: eine erste Querschnittsdarstellung einer Nutenwelle der Ausgangsgetriebestufe aus Figur 3 und
- Fig. 4b: eine Stirnseitenansicht der Nutenwelle aus Figur 4a

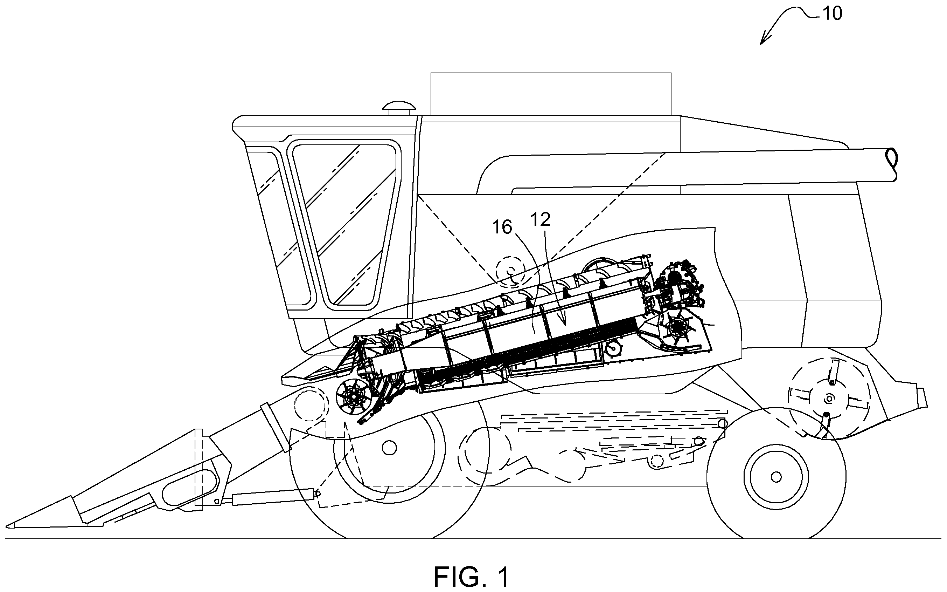

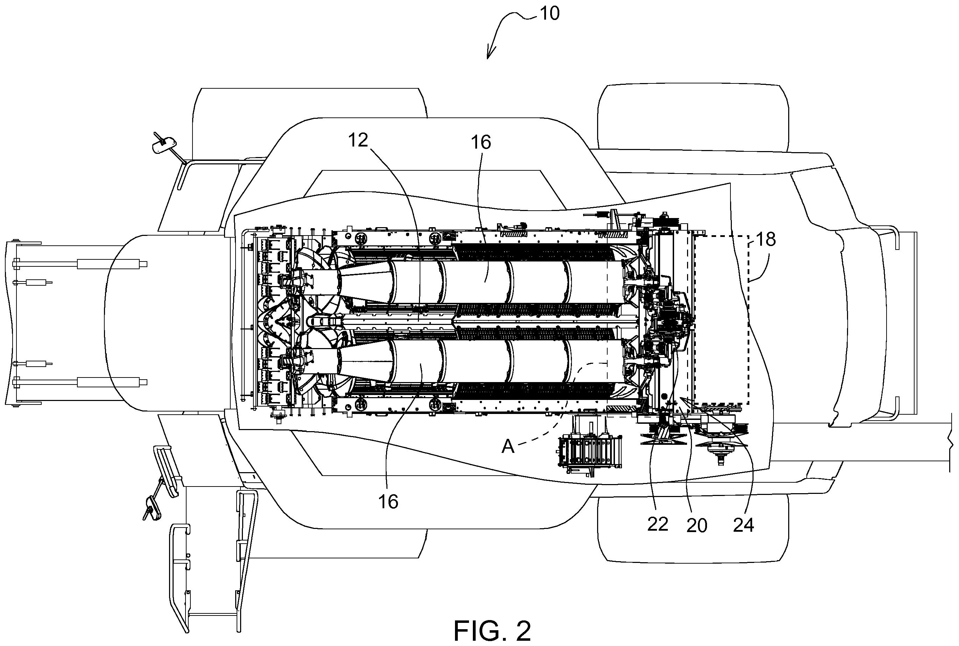

Figur 1 und Figur 2 zeigen eine selbstfahrende landwirtschaftliche Maschine 10, die beispielhaft in Form eines Mähdreschers ausgebildet ist. Denkbar ist durchaus auch, dass das im Folgenden weiter beschriebene Ausführungsbeispiel auch an einer andersartigen selbstfahrenden landwirtschaftlichen Maschine, beispielsweise einem Feldhäcksler, einer Mähmaschine, einem Zuckerrohrernter, einer Ballenpresse oder an einer Feldspritze ausgebildet sein kann.

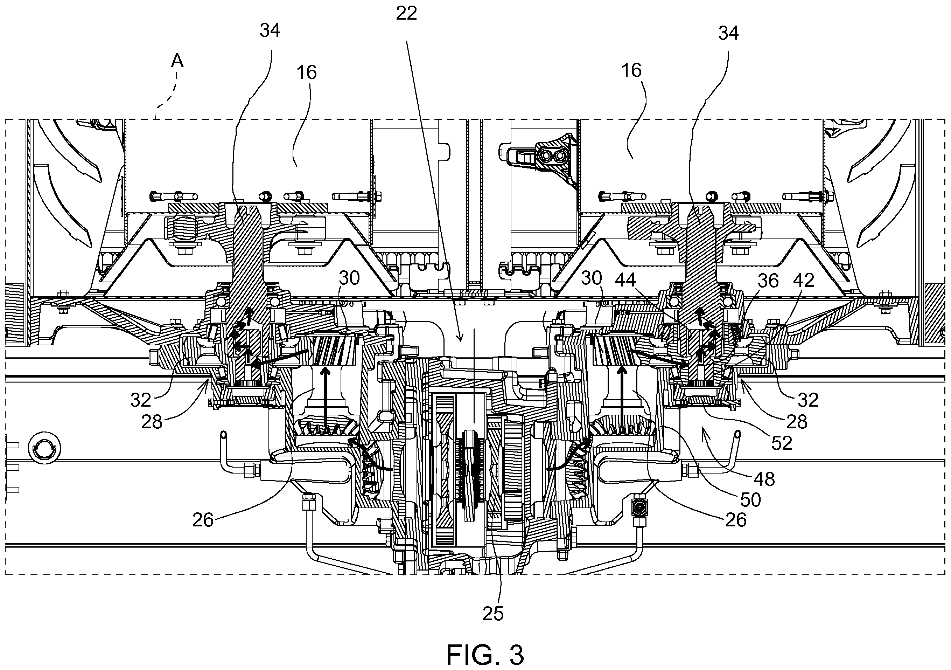

Die landwirtschaftliche Maschine 10 weist eine Bearbeitungseinrichtung 12 in Form einer Drescheinrichtung mit zwei in Längsrichtung der landwirtschaftlichen Maschine 10 ausgerichteten Axialrotoren 16 auf. Die landwirtschaftliche Maschine 10 wird von einem (nur schematisch dargestellten) Verbrennungsmotor 18 angetrieben. Der Verbrennungsmotor 18 ist ausgangsseitig mit einem Riemengetriebe 20 verbunden, welches wiederum ein Zwischengetriebe 22 antreibt. Riemengetriebe 20 und Zwischengetriebe 22 bilden hierbei einen Antriebsstrang 24 für die Bearbeitungseinrichtung 12. Wie genauer in Figur 3 zu erkennen ist, weist das Zwischengetriebe 22 eine Verzweigungsgetriebestufe 25 auf, die einen Antrieb für eine Drescheinrichtung mit zwei Axialrotoren 16 ermöglicht, wobei für jeden der Axialrotoren 16 eine Ausgangswelle 26 vorgesehen ist, die jeweils antriebsmäßig mit einer Ausgangsgetriebestufe 28 in Verbindung steht. In Figur 3 ist durch Anordnung der Pfeile die Antriebsflussrichtung in der Verzweigungsgetriebestufe 25 sowie in der Ausgangsgetriebestufe 28 angedeutet. Die jeweilige Ausgangswelle 26 stellt einen Abtrieb des Zwischengetriebes 22 dar und ist über eine Ausgangsverzahnung 30 mit einem Eingangszahnrad 32 der jeweiligen Ausgangsgetriebestufe 28 antriebsverbunden. Die jeweiligen Ausgangsgetriebestufen 28 sind im Wesentlichen baugleich wie im Folgenden beschrieben ausgebildet.

Jede der Ausgangsgetriebestufen 28 weist eine Abtriebswelle 34 für die jeweiligen Axialrotoren 16 der Bearbeitungseinrichtung 12 auf, wobei die Abtriebswelle 34 jeweils über eine Nutenwelle 36 mit dem Eingangszahnrad 32 der Ausgangsgetriebestufe 28 drehfest verbunden ist, derart, dass eine Antriebsverbindung zwischen Eingangszahnrad 32 und Abtriebswelle 34 über die Nutenwelle 36 erfolgt.

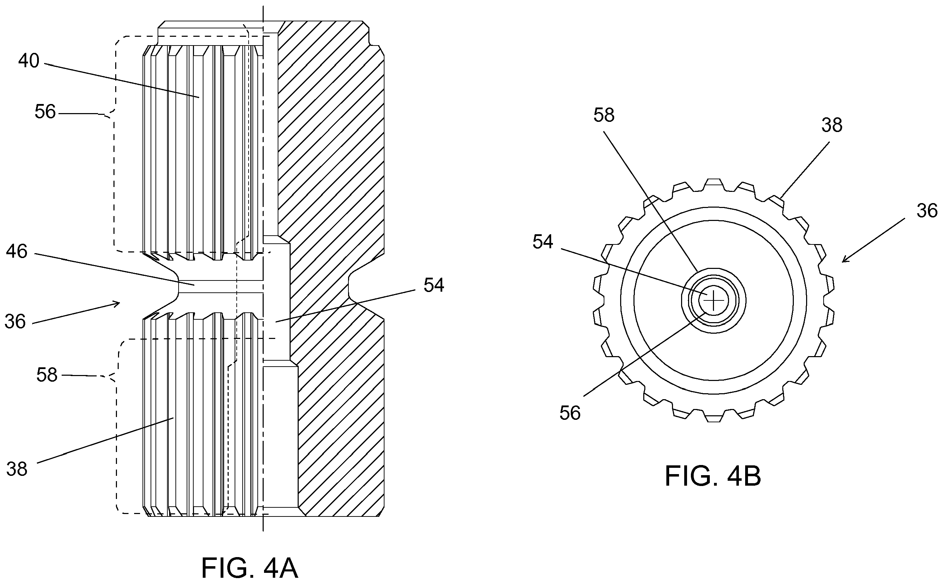

Die Nutenwelle 36 einer jeweiligen Ausgangsgetriebestufe 28 ist im Detail in den Figuren 4a und 4b dargestellt. Die Nutenwelle 36 weist eingangsseitig eine Außenverzahnung 38 und ausgangsseitig eine Außenverzahnung 40 auf, wobei die eingangsseitige Außenverzahnung 38 mit einer am Eingangszahnrad 32 ausgebildeten Innenverzahnung 42 und die ausgangsseitige Außenverzahnung 40 mit einer an der Abtriebswelle 34 ausgebildeten Innenverzahnung 44 in Eingriff steht.

Zwischen der eingangsseitigen und ausgangsseitigen Außenverzahnung 38, 40 der Nutenwelle 36 ist eine Ringnut 46 ausgebildet, die eine Sollbruchstelle im Falle einer Überlastung der Nutenwelle 36 darstellt.

Die am Eingangszahnrad 32 ausgebildete Innenverzahnung 42 ist als Durchgangsinnenverzahnung ausgebildet. Ferner ist an jedem der Ausgangsgetriebestufen 28 eine Montageöffnung 48 eingerichtet, die an einer den Antriebsstrang 24 und die Ausgangsgetriebestufen 28 umgebenden Gehäusewand 50, axial zur jeweiligen Nutenwelle 36 fluchtend, ausgebildet ist. Die Montageöffnung 48 ist über einen Deckel 52 verschlossen und ermöglicht zu Montagezwecken durch Entfernen des Deckels 52 einen direkten Zugang zur Innenverzahnung 42 des jeweiligen Eingangszahnrads 32 und damit zu einer jeweiligen eingangszahnradseitigen Stirnfläche der Nutenwelle 36.

Ferner ist in der Nutenwelle 36 eine sich in Längsrichtung der Nutenwelle 36 erstreckende Gewindebohrung 54 ausgebildet, wobei in einem sich in Antriebsflussrichtung hinter der Ringnut 46 erstreckenden Teil 56 der Nutenwelle 36 die Gewindebohrung 54 einen geringeren Durchmesser aufweist als in einem in Antriebsflussrichtung vor der Ringnut 46 erstreckenden Teil 58 der Gewindebohrung 54.

Die Bearbeitungseinrichtung 12 kann als Drescheinrichtung, Häckseleinrichtung oder Schneideinrichtung ausgebildet sein. Derartige Bearbeitungseinrichtungen sind mitunter hohen Drehmomentbelastungen ausgesetzt, insbesondere wenn Fremdkörper oder zu viel Erntegut in die Bearbeitungseinrichtung 12 gelangt. Um größere Schäden, insbesondere im Antriebsstrang und/oder an den Axialrotoren 16 zu vermeiden, soll durch die in der Nutenwelle 36 ausgebildete Ringnut 46 für den Fall einer Überlastung eine definierte Sollbruchstelle für eine Abscherung bzw. einen Bruch der Nutenwelle 36 geschaffen werden. Im Falle eines solchen Bruchs der Nutenwelle 36 ermöglicht die Montageöffnung 48 einen direkten Zugang zur Nutenwelle, so dass aufwändige Arbeiten, die ein Öffnen des gesamten Antriebsstrangs 24 und insbesondere den Ausbau desselben erfordern, ausbleiben. Standzeiten und Reparaturzeiten können dadurch minimiert werden.

Die in der Nutenwelle 36 ausgebildete Gewindebohrung 54 ermöglicht, dass nach einem Überlastbruch der Nutenwelle 36 ein passender Gewindestift (nicht gezeigt) in die Gewindebohrungen 54 der jeweiligen Hälften der gebrochenen bzw. abgescherten Nutenwelle 36 eingedreht werden kann und die jeweiligen Hälften der Nutenwelle herausgezogen werden können. Dabei begünstigen die unterschiedlichen Durchmesser in der Gewindebohrung 54, dass das Gewinde im antriebsseitig hinter der Ringnunt 46 liegenden Teil 56, welches einen geringeren Durchmesser aufweist als das Gewinde im antriebsseitig vor der Ringnunt 46 liegenden Teil 58, auch nach dem Bruch der Nutenwelle 36 unbeschädigt ist.

## Patentansprüche

1. Landwirtschaftliche Maschine (10) mit wenigstens einer Bearbeitungseinrichtung (12) für Erntegut und einem Antriebsstrang (24) für die wenigstens eine Bearbeitungseinrichtung (12), wobei der Antriebsstrang (24) eine Ausgangsgetriebestufe (28) mit einer Abtriebswelle (34) für die wenigstens eine Bearbeitungseinrichtung (12) aufweist, wobei die Ausgangsgetriebestufe (28) ein Eingangszahnrad (32) und eine mit dem Eingangszahnrad (32) und der Abtriebswelle (34) drehfest verbundene Nutenwelle (36) umfasst, derart, dass eine Antriebsverbindung zwischen Eingangszahnrad (32) und Abtriebswelle (34) über die Nutenwelle (36) erfolgt, **dadurch gekennzeichnet, dass** die Nutenwelle (36) mit einer eine Sollbruchstelle vorgebenden Ringnut (46) versehen ist, wobei die Ringnut (46) in Antriebsflussrichtung zwischen dem Eingangszahnrad (32) und der Abtriebswelle (34) ausgebildet ist, und die Nutenwelle (36) eingangszahnradseitig durch eine Montageöffnung (48) zugänglich ist, die an einer den Antriebsstrang (24) umgebenden Gehäusewand (50), axial zur Nutenwelle (36) fluchtend, ausgebildet ist.

2. Landwirtschaftliche Maschine (10) nach Anspruch 1, **dadurch gekennzeichnet, dass** am Eingangszahnrad (32) und an der Abtriebswelle (34) Innenverzahnungen (42, 44) ausgebildet sind, wobei die am Eingangszahnrad (32) ausgebildete Innenverzahnung (42) als Durchgangsinnenverzahnung ausgebildet ist und beide Innenverzahnungen (42, 44) axial zueinander fluchten und wobei die Nutenwelle (36) beide Innenverzahnungen (42, 44) in Antriebsflussrichtung miteinander verbindet.

3. Landwirtschaftliche Maschine (10) nach Anspruch 2, **dadurch gekennzeichnet, dass** die Ringnut (46) zwischen den Innenverzahnungen (42, 44) ausgebildet ist.

4. Landwirtschaftliche Maschine (10) nach einem der Ansprüche 1 bis 3, **dadurch gekennzeichnet, dass** in der Nutenwelle (36) eine sich in Längsrichtung der Nutenwelle (36) erstreckende Gewindebohrung (54) ausgebildet ist.

5. Landwirtschaftliche Maschine (10) nach Anspruch 4, **dadurch gekennzeichnet, dass** ein sich in Antriebsflussrichtung hinter der Ringnut (46) erstreckender Teil (56) der Gewindebohrung (54) einen geringeren Durchmesser aufweist als ein in Antriebsflussrichtung vor der Ringnut (46) erstreckender Teil (58) der Gewindebohrung (54).

6. Landwirtschaftliche Maschine (10) nach einem der Ansprüche 1 bis 5, **dadurch gekennzeichnet, dass** die wenigstens eine Bearbeitungseinrichtung (12) als Drescheinrichtung, Häckseleinrichtung oder Schneideinrichtung ausgebildet ist.

## Claims

1. Agricultural machine (10) having at least one processing device (12) for harvested material and a drive train (24) for the at least one processing device (12), wherein the drive train (24) has an output transmission stage (28) with an output shaft (34) for the at least one processing device (12), wherein the output transmission stage (28) comprises an input gear (32) and a grooved shaft (36) connected in a non-rotatable manner to the input gear (32) and the output shaft (34) in such a manner that a drive connection between the input gear (32) and the output shaft (34) is achieved via the grooved shaft (36), **characterized in that** the grooved shaft (36) is provided with a ring groove (46) defining a predetermined breaking point, wherein the ring groove (46) is configured in the drive flow direction between the input gear (32) and the output shaft (34) and the grooved shaft (36) is accessible through an assembly opening (48) on the input gear side which is configured on a housing wall (50) surrounding the drive train (24), axially aligned with the grooved shaft (36).

2. Agricultural machine (10) according to Claim 1, **characterized in that** internal toothing (42, 44) is provided on the input gear (32) and on the output shaft (34), wherein the internal toothing (42) formed on the input gear (32) is configured as continuous internal toothing and both sets of internal toothing (42, 44) are axially aligned with one another and wherein the grooved shaft (36) connects both sets of internal toothing (42, 44) to one another in the drive flow direction.

3. Agricultural machine (10) according to Claim 2, **characterized in that** the ring groove (46) is configured between the sets of internal toothing (42, 44).

4. Agricultural machine (10) according to one of Claims 1 to 3, **characterized in that** a threaded bore (54) extending in the longitudinal direction of the grooved shaft (36) is formed in the grooved shaft (36) .

5. Agricultural machine (10) according to Claim 4, **characterized in that** a part (56) of the threaded bore (54) extending downstream of the ring groove (46) in the drive flow direction has a smaller diameter than a part (58) of the threaded bore (54) extending upstream of the ring groove (46) in the drive flow direction.

6. Agricultural machine (10) according to one of Claims 1 to 5, **characterized in that** the at least one processing device (12) is configured as a threshing device, chopping device or cutting device.

## Revendications

1. Engin agricole (10) comprenant au moins un dispositif de traitement (12) de récolte et une chaîne cinématique (24) pour l'au moins un dispositif de traitement (12), la chaîne cinématique (24) présentant un étage de transmission de sortie (28) avec un arbre de prise de force (34) pour l'au moins un dispositif de traitement (12), l'étage de transmission de sortie (28) comprenant une roue dentée d'entrée (32) et un arbre cannelé (36) connecté de manière solidaire en rotation à la roue dentée d'entrée (32) et à l'arbre de prise de force (34), de telle sorte qu'une liaison d'entraînement entre la roue dentée d'entrée (32) et l'arbre de prise de force (34) s'effectue par le biais de l'arbre cannelé (36),
**caractérisé en ce que** l'arbre cannelé (36) est pourvu d'une rainure annulaire (46) prédéfinissant une zone de rupture, la rainure annulaire (46) étant réalisée dans la direction du flux d'entraînement entre la roue dentée d'entrée (32) et l'arbre de prise de force (34), et l'arbre cannelé (36) étant accessible du côté de la roue dentée d'entrée par une ouverture de montage (48) qui est réalisée au niveau d'une paroi de boîtier (50) entourant la chaîne cinématique (24), en affleurement axialement par rapport à l'arbre cannelé (36).

2. Engin agricole (10) selon la revendication 1,
**caractérisé en ce que** des dentures intérieures (42, 44) sont réalisées au niveau de la roue dentée d'entrée (32) et au niveau de l'arbre de prise de force (34), la denture intérieure (42) réalisée au niveau de la roue dentée d'entrée (32) étant réalisée sous forme de denture intérieure de passage et les deux dentures intérieures (42, 44) étant alignées axialement l'une avec l'autre et l'arbre cannelé (36) reliant les deux dentures intérieures (42, 44) l'une à l'autre dans la direction du flux d'entraînement.

3. Engin agricole (10) selon la revendication 2,
**caractérisé en ce que** la rainure annulaire (46) est réalisée entre les dentures intérieures (42, 44).

4. Engin agricole (10) selon l'une quelconque des revendications 1 à 3, **caractérisé en ce que** dans l'arbre cannelé (36) est réalisé un alésage fileté (54) s'étendant dans la direction longitudinale de l'arbre cannelé (36).

5. Engin agricole (10) selon la revendication 4,
**caractérisé en ce qu'**une partie (56) de l'alésage fileté (54) s'étendant dans la direction du flux d'entraînement derrière la rainure annulaire (46) présente un plus petit diamètre qu'une partie (58) de l'alésage fileté (54) s'étendant dans la direction du flux d'entraînement devant la rainure annulaire (46).

6. Engin agricole (10) selon l'une quelconque des revendications 1 à 5, **caractérisé en ce que** l'au moins un dispositif de traitement (12) est réalisé sous forme de dispositif de battage, dispositif de hachage ou dispositif de coupe.
